# FASCICULE DE BREVET EUROPEEN

(11) **EP 0 628 446 B1**
(45) Date de publication et mention de la délivrance du brevet: **11.02.1998**
(21) Numéro de dépôt: 94401293.9
(22) Date de dépôt: 09.06.1994
(51) Int. Cl.: B60N 2/22, B60N 2/16, B60N 2/48

(54) **Articulation à rattrapage de jeux utilisée dans les sièges automobiles**
Gelenk mit Nachregulierung des Spiels für Fahrzeugsitze
Clearance take-up articulation for motor vehicle seats

(30) Priorité: 11.06.1993 FR 9307044
(43) Date de publication de la demande: 14.12.1994
(73) Titulaire: BERTRAND FAURE AUTOMOBILE "B.F.A.", F-91300 Massy (FR)
(72) Inventeur: Baloche, François, F-61100 Flers (FR); Droulon, Georgers, F-61100 Flers (FR)
(74) Mandataire: Madeuf, René Louis

(56) Documents cités:
- EP-A- 0 340 118
- EP-A- 0 505 229
- WO-A-80/02677
- DE-A- 3 419 492
- FR-A- 2 627 437

## Description

La présente invention a pour objet une articulation utilisée dans les sièges automobiles, notamment pour régler l'inclinaison du dossier du siège ou l'assiette de l'assise du siège, ou encore l'inclinaison de la têtière du siège placée en haut du dossier.

On connaît déjà des articulations incorporées dans les sièges de véhicules pour les buts exposés ci-dessus, et pour lesquelles l'entraînement se fait soit par l'intermédiaire d'un satellite, soit directement sur le flasque mobile, ces articulations comprenant deux demi-cames repoussées par un élément élastique central.

Une telle articulation est décrite en particulier dans le document FR-A-2 649 050 dans lequel l'entraînement se fait par l'intermédiaire d'un satellite, et une articulation similaire est également décrite dans le document FR-A-2 479 885 dans lequel l'entraînement se fait directement sur le flasque mobile.

Cependant, ces dernières solutions n'assurent pas l'irréversibilité de l'articulation mais seulement le rattrapage du jeu.

On connaît également, par l'intermédiaire du DE-A-3419492, une articulation comportant des flasques, avec ou sans satellite, munis de dentures coniques poussées par un ressort à effet axial permettant de rattraper le jeu entre les dentures.

Cette articulation comporte également une came d'entraînement composée de deux disques circulaires écartés l'un de l'autre par un ressort, afin de rattraper uniquement les jeux de palier.

La présente invention a pour but de s'affranchir de l'utilisation de dentures coniques coûteuses, en rattrapant le jeu de dentures par l'intermédiaire des deux disques formant came, tout en assurant le rattrapage du jeu de palier et l'irréversibilité de l'articulation.

Conformément à l'invention, l'articulation, comporte un flasque fixe présentant une denture intérieure destinée à coopérer soit avec un satellite double dont les dentures engrènent, d'un côté, avec la denture du flasque fixe et, de l'autre côté, avec la denture intérieure d'un flasque mobile, soit directement avec la denture intérieure du flasque mobile, un excentrique agissant soit sur le satellite, soit directement sur le flasque mobile, un axe d'entraînement de l'excentrique muni d'au moins un ergot, l'excentrique étant constitué de deux disques mobiles angulairement l'un par rapport à l'autre et reliés l'un à l'autre par un élément élastique logé dans deux fenêtres arquées, tandis que la partie centrale de ces disques est percée chacune d'au moins un évidement circulaire, prolongé par un logement creux destiné à recevoir l'ergot de l'axe d'entraînement, cette articulation étant caractérisée en ce que chaque disque a une forme non circulaire telle que lorsqu'ils sont écartés angulairement l'un de l'autre, ils constituent ensemble un quasi-cercle qui occupe pratiquement tout l'alésage central du satellite, chaque disque étant logé dans un alésage du satellite ou du flasque mobile, les deux disques en position écartée l'un par rapport à l'autre assurant alors le rattrapage de jeu et l'irréversibilité de l'articulation.

Suivant une autre particularité de l'invention, pour assurer la manoeuvre de l'articulation, les deux logements creux des disques sont décalés angulairement quand les deux disques sont en position écartée l'un par rapport à l'autre, afin que l'ergot agisse d'abord sur un disque pour débloquer l'excenpuis sur les deux simultanément.

Suivant une autre caractéristique de l'invention pour garantir l'effet du ressort, chaque fenêtre arquée comporte, à une extrémité, un dégagement assurant au ressort une portée sur une seule lumière arquée.

Suivant une autre caractéristique de l'invention, l'articulation est caractérisée en ce que la liaison entre le flasque fixe et le flasque mobile est réalisée par l'intermédiaire d'un anneau serti avec interposition entre cet anneau et le flasque mobile d'une couronne de billes.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés. En particulier, toutes les articulations telles que décrites ci-après sont des articulations comportant un satellite mais, bien entendu, l'excentrique pourrait agir directement sur le flasque mobile.

La fig. 1 est une vue éclatée en perspective d'une première forme de réalisation de l'articulation.

La fig. 2 est une coupe diamétrale de l'articulation de la fig. 1.

La fig. 3 est une coupe suivant la ligne III-III de la fig. 2.

La fig. 3A est une vue partielle de la fig. 3, à plus grande échelle, montrant de face en position de non-réglage les disques formant excentrique ou came.

La fig. 4 montre l'articulation de la fig. 3 en position d'entraînement du satellite.

La fig. 5 est une coupe diamétrale d'une variante de réalisation du mécanisme d'articulation, conforme à l'invention.

La fig. 6 est une coupe suivant la ligne VI-VI de la fig. 5.

La fig. 7 est une coupe diamétrale d'une autre variante du mécanisme d'entraînement du satellite.

La fig. 8 est une coupe suivant la ligne VIII-VIII de la fig. 7.

La fig. 9 est une coupe selon la ligne XI-XI de la fig. 10 de l'articulation en cours de montage à l'aide de deux piges.

La fig. 10 est une coupe suivant la ligne X-X de la fig. 9, en cours de montage de l'excentrique dans l'articulation.

La fig. 11 est une coupe selon la ligne XI-XI de la fig. 10 de l'articulation en cours de montage à l'aide de semi-découpes.

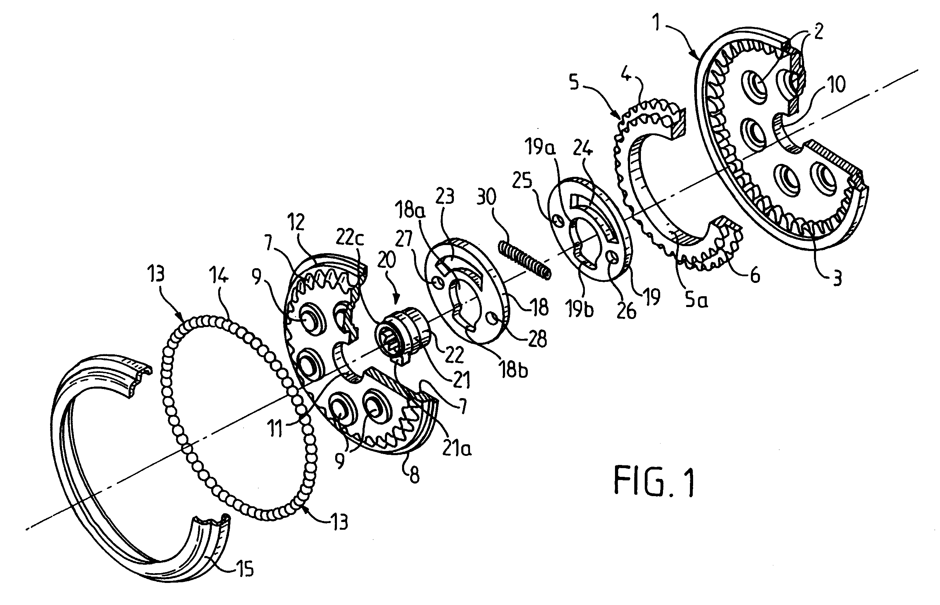

Dans la fig. 1, l'articulation est constituée principalement par un flasque fixe 1 qui est relié à l'armature de l'assise du siège par des organes de fixation quelconques liés par exemple par soudage à des protubérances 2 semi-découpées dans le fond du flasque. Ce dernier contient intérieurement une denture 3 destinée à coopérer avec la denture 4 d'un satellite 5 dont la deuxième denture 6 engrène partiellement avec la denture 7 du flasque mobile 8. Ce dernier est rendu solidaire de l'armature du dossier du siège par des protubérances 9.

La partie centrale du flasque fixe 1 est percée d'un canal 10 qui correspond au canal central 11 du flasque mobile 8.

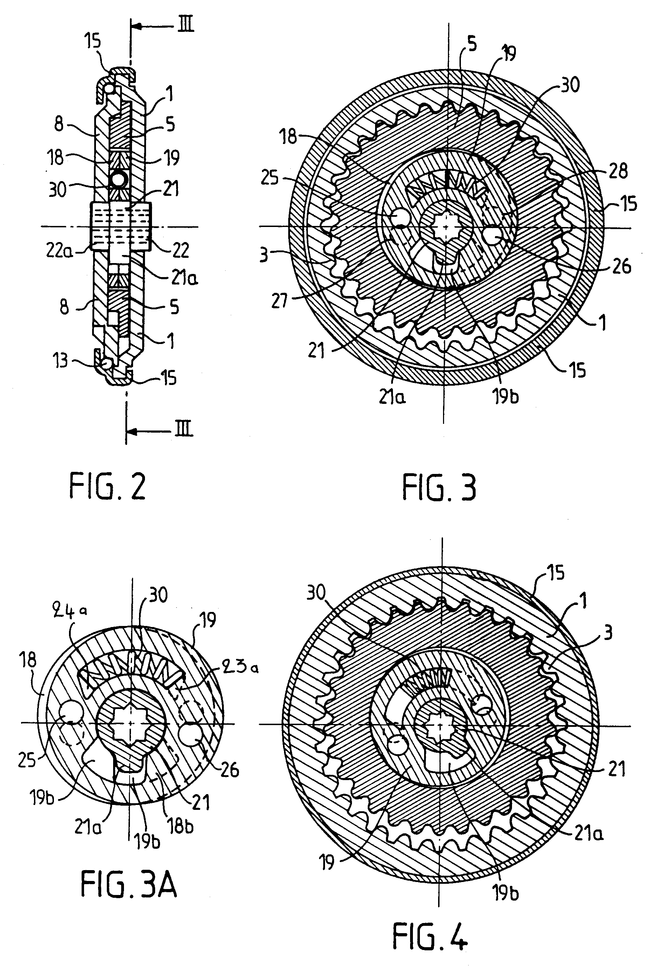

Comme cela est particulièrement visible aux fig. 1 et 2, le pourtour extérieur 12 du flasque mobile 8 reçoit une couronne 13 de billes 14 et la liaison entre le flasque fixe 1 et le flasque mobile 8 est réalisée par un anneau serti 15 (voir fig. 1 et 2).

Deux disques 18, 19 sont placés à l'intérieur de la partie évidée 5a du satellite 5 et sont montés sur un axe 20 comportant une portée centrale 21 de grand diamètre, présentant un ergot 21a tandis que les deux autres extrémités de l'axe 20 sont constituées par des prolongements cylindriques 22, 22a ayant un diamètre égal au diamètre des canaux 10, 11 percés dans les flasques fixe 1 et mobile 8.

Les disques 18, 19 placés dans la partie évidée 5a du satellite 5 ont une même forme extérieure non circulaire, comme le montre la fig. 4. En effet, dans cette figure, on voit bien que l'alésage central 5a du satellite est circulaire, tandis que les disques superposés présentent une forme identique qui ne remplit pas complètement l'alésage central du satellite. Dans la fig. 3, agrandie en 3A, on voit bien que les disques, en position de non-réglage, sont écartés l'un de l'autre pour constituer ensemble un quasi-cercle qui occupe pratiquement tout l'alésage central du satellite. Le disque 19 se trouve décalé sur la droite tandis que le disque 18 se trouve décalé sur la gauche. De plus, l'évidement central 18a est prolongé, à sa partie inférieure, par un logement creux 18b, et l'évidement central 19a par un logement creux 19b, ces deux logements étant également décalés, l'un 18b sur la droite et l'autre 19b sur la gauche.

Chaque disque comporte également une fenêtre arquée 23 pour le disque 18, et 24 pour le disque 19. Ces fenêtres arquées sont concentriques à l'axe central de chacun de ces disques. Une extrémité de la fenêtre 23 comporte un évidement 23a tandis que l'extrémité opposée de la fenêtre 24 comporte un évidement 24a. Ces deux évidements permettent à une extrémité du ressort de porter sur un disque, mais pas sur l'autre, et à l'autre extrémité du ressort de porter sur l'autre disque.

Finalement, il y a lieu de signaler que chaque disque comporte des trous 25, 26 pour le disque 19, et 27, 28 pour le disque 18, ces trous étant diamétralement opposés deux à deux, mais légèrement décalés angulairement pour chaque disque (voir fig. 3A).

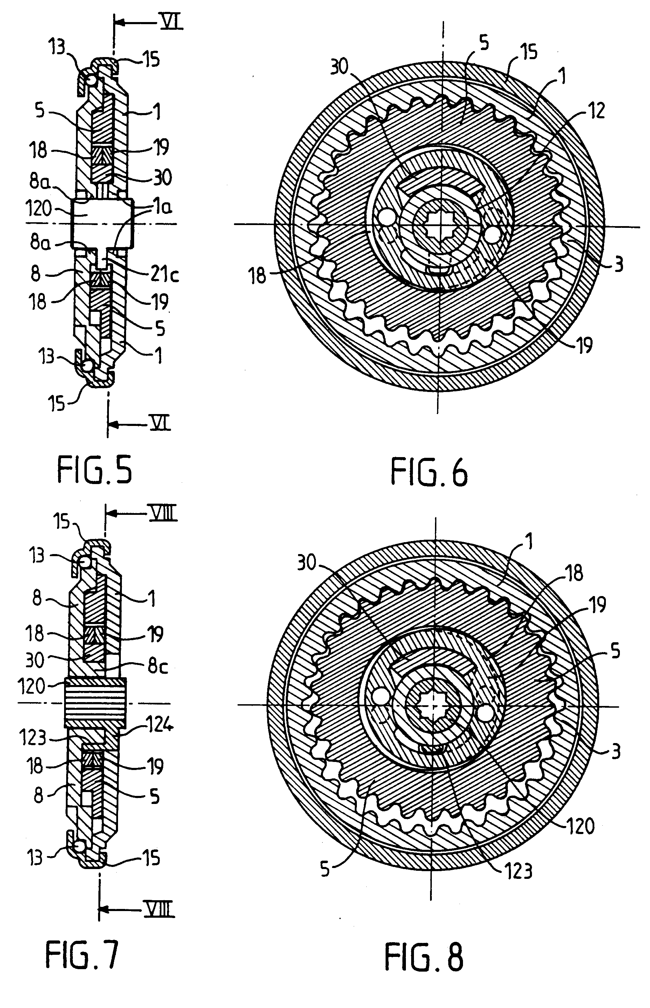

Enfin, 30 désigne un élément élastique destiné à être logé dans les fenêtres arquées 23, 24 des disques 18, 19, lorsque ceux-ci sont accolés l'un à l'autre sur la portée centrale 21 de l'axe 20. Cet élément élastique 30 peut être, par exemple, soit un ressort (fig. 1, 2, 3 et 4), soit un bloc élastique (fig. 5, 6, 7, 8, 9, 10 et 11).

En position de non-réglage, les pièces du mécanisme occupent la position représentée aux fig. 3 et 3A. L'ergot occupe une position centrale et les deux disques sont écartés l'un de l'autre. Comme la forme extérieure des disques est non-circulaire, ils tendent à repousser le satellite vers le haut, c'est-à-dire à pousser les dentures 4 et 6 du satellite 5 contre les dentures de l'un des flasques, fixe 1 ou mobile 8. Ils tendent également à bloquer le satellite en rotation.

Lorsqu'on désire modifier la position soit à l'aide d'une commande manuelle, soit à l'aide d'un moteur, en général électrique, la rotation de l'axe 20 provoque la rotation angulaire de l'ergot 21a qui déplace d'abord le disque 19 puis le disque 18, les disques 18, 19 étant alors en concordance, c'est-à-dire qu'ils sont pratiquement superposés. Ceci provoque la surcompression du ressort 30 qui, au départ, est déjà compressé.

Dans cette position resserrée des disques 18, 19, il est alors possible de les entraîner simultanément, ce qui constitue une came qui, en tournant dans la partie évidée 5a du satellite 5, provoque la rotation de ce dernier. La denture 4 en roulant, dans la denture 3 du flasque fixe 1, provoque alors la rotation de la denture 6 du satellite 5 en entraînant, par l'intermédiaire de la denture 7, le flasque mobile 8, d'une manière connue en soi, pour tous les mécanismes d'articulations à satellite double.

Lorsque la position recherchée de l'articulation est atteinte, la rotation de l'axe 20 est arrêtée et, à ce moment, l'ergot reprend une position centrale et, sous l'effet du ressort bandé 30, les disques 18, 19 s'écartent l'un de l'autre. On obtient alors un blocage des dentures du satellite en fond des dentures de l'un des flasques, fixe 1 ou mobile 8, en rattrapant ainsi les jeux pouvant exister du fait des irrégularités de ces dentures lors de leur taillage.

On obtient également un blocage en rotation du satellite par l'excentrique, ce qui assure l'irréversibilité de l'articulation.

Quel que soit le sens de rotation de l'axe 20, le même fonctionnement a lieu tantôt dans le sens des aiguilles d'une montre, tantôt dans le sens inverse des aiguilles d'une montre.

Aux fig. 5 et 6, les deux disques 18 et 19 portent sur des semi-découpes la, 8a des flasques 1, 8, l'axe 120 étant guidé dans ces semi-découpes. L'avantage de cette solution réside dans le fait que les disques sont centrés directement sur les flasques et non plus par l'intermédiaire de l'axe.

Le fonctionnement de ce mécanisme d'articulation est strictement le même que celui décrit précédemment.

Aux fig. 7 et 8, les deux disques 18, 19 portent sur le même palier 8c d'un flasque, ce qui améliore encore le centrage. Là encore, le fonctionnement du mécanisme est strictement identique à celui précédemment décrit.

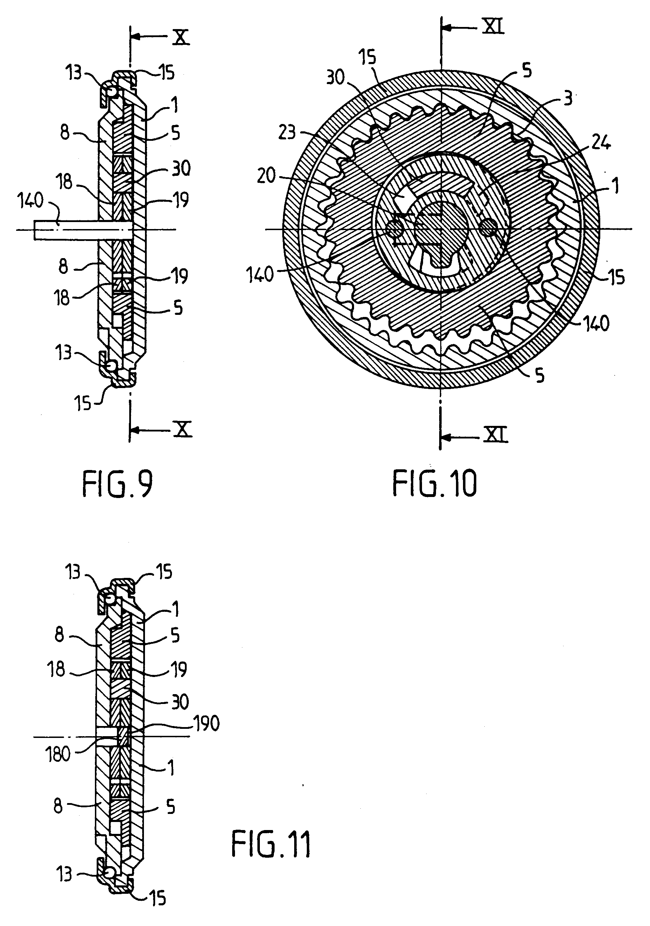

Pour finir, il est montré aux fig. 9 et 10, un mécanisme employant des piges 140, l'une passant à travers les trous 25 et 27 des disques respectivement 18, 19, l'autre passant à travers les trous 26 et 28 des disques respectivement 18, 19 qui permettent la mise en place de cette came double dans la partie évidée 5a du satellite 5, dans ce cas, l'élément élastique étant surcompressé.

Dans la fig. 11, les piges 140 des fig. 9 et 10 sont remplacées par des semi-découpes 180 pratiquées dans le disque 18 et engagées dans des trous 190 du disque 19. Après montage, les semi-découpes 180 sont poussées dans les trous 190, ce qui libère les deux disques l'un par rapport à l'autre.

D'autre part, les organes mécaniques de montage, tels que piges ou semi-découpes, peuvent être avantageusement remplacés par un collage temporaire d'un disque sur l'autre, ce collage pouvant s'éliminer lors du premier emploi de l'articulation.

## Revendications

1. Articulation utilisée dans les sièges automobiles, comportant un flasque fixe (1) présentant une denture intérieure (3) destinée à coopérer soit avec un satellite double (5) dont les dentures (4 et 6) engrènent, d'un côté, avec la denture (3) du flasque fixe (1) et, de l'autre côté, avec la denture intérieure (7) d'un flasque mobile (8), soit directement avec la denture intérieure du flasque mobile, un excentrique agissant soit sur le satellite, soit directement sur le flasque mobile et un axe d'entraînement de l'excentrique muni d'au moins d'un ergot (21a), l'excentrique étant constitué de deux disques (18, 19) mobiles angulairement l'un par rapport à l'autre et reliés l'un à l'autre par un élément élastique (30) logé dans deux fenêtres arquées (23, 24), tandis que la partie centrale de ces disques (18, 19) est percée chacune d'au moins un évidement circulaire (18a, 19a), prolongé par un logement creux (18b, 19b) destiné à recevoir l'ergot (21a) de l'axe d'entraînement, caractérisée en ce que chaque disque a une forme non circulaire telle que lorsqu'ils sont écartés angulairement l'un de l'autre, ils constituent ensemble un quasi-cercle qui occupe pratiquement tout l'alésage central du satellite, chaque disque étant logé dans un alésage (5a) du satellite ou du flasque mobile, les deux disques en position écartée l'un par rapport à l'autre assurant alors le rattrapage de jeu et l'irréversibilité de l'articulation.

2. Articulation selon la revendication 1, caractérisée en ce que les deux logements creux (18b, 19b) des disques sont décalés angulairement quand les deux disques sont en position écartée l'un par rapport à l'autre, afin que l'ergot agisse d'abord sur un disque pour débloquer l'excentrique, puis sur les deux simultanément.

3. Articulation selon la revendication 1 ou 2, caractérisée en ce que chaque fenêtre arquée comporte, à une extrémité, un dégagement (23a, 24a), assurant au ressort une portée sur une seule lumière arquée.

4. Articulation suivant l'une des revendications 1 à 3, caractérisée en ce que la liaison entre le flasque fixe (1) et le flasque mobile (8) est réalisée par l'intermédiaire d'un anneau serti (15) avec interposition entre cet anneau (15) et le flasque mobile (8) d'une couronne (13) de billes (14).

5. Articulation suivant l'une des revendications 1 à 4, caractérisée en ce que les disques (18, 19) sont percés de trous (25, 26, 27, 28) diamétralement opposés pour chaque disque (18, 19) et décalés angulairement par paire, du fait de l'excentration de ces disques (18, 19) lorsque l'élément élastique (30) est compressé, les trous (25, 26, 27, 28) permettant le montage de la came de commande réalisée par les deux disques (18, 19) à l'aide d'organes quelconques, lorsque l'élément élastique est surcompressé.

6. Articulation selon l'une des revendications 1 à 5, caractérisée en ce que les disques sont collés l'un sur l'autre en position de montage.

7. Articulation selon l'une des revendications 1 à 6, caractérisée en ce que l'un des disques (18) comporte deux semi-découpes (180) engagées dans des trous (190) de l'autre disque (19).

8. Articulation selon l'une des revendications 1 à 6, caractérisée en ce que les deux disques portent sur un palier solidaire de l'un des flasques.

## Claims

1. Articulation used in motor vehicle seats, including a fixed flange (1) having an inner toothing (3) for cooperating either with a double satellite (5), the toothings (4 and 6) of which mesh on one side with the toothing (3) of the fixed flange (1) and on the other side with the inner toothing (7) of a mobile flange (8), or directly with the inner toothing of the mobile flange, an eccentric acting either on the satellite or directly on the mobile flange, and a driving axis of the eccentric provided with at least one snug (21a), the eccentric being made of two discs (18, 19) angularly mobile with respect to one another and connected to one another by a resilient element (30) housed in two arched windows (23, 24), while each of the central portion of these discs (18, 19) is formed with at least one circular recess (18a, 19a), extended by a hollow housing (18b, 19b) adapted for receiving the snug (21a) of the driving axis, characterized in that each disc has an un-circular shape such, as when they are angularly spaced apart, they constitute together a quasi-circle that accupies practically all the central bore of the satellite, each disc being housed inside a bore (5a) of the satellite or of the mobile flange, the two discs, when in a position spaced apart from one another, ensuring the clearance take-up and also the irreversibility of the articulation.

2. Articulation according to claim 1, characterized in that the two hollow housings (18b, 19b) of the discs are angularly offset when the two discs are in a position where they are spaced apart from one another, in order that the snug acts first on one disc for unblocking the eccentric, then on the two simultanenously.

3. Articulation according to claim 1 or 2, characterized in that each arched window includes, at one end, a recess (23a, 24a) providing to the spring a bearing on a single arched opening.

4. Articulation according to one of claims 1 to 3, characterized in that the connection between the fixed flange (1) and the mobile flange (8) is made via a crimped ring (15) with interposition, between this ring (15) and the mobile flange (8), of a crown (13) made of balls (14).

5. Articulation according to one of claims 1 to 4, characterized in that the discs (18, 19) are formed with holes (25, 26, 27, 28) diametrically opposite for each disc (18, 19) and angularly offset by pairs, due to the offsetting of these discs (18, 19) when the resilient element (30) is compressed, the holes (25, 26, 27, 28) allowing for the mounting of the control cam provided by the two discs (18, 19) with the assistance of any suitable members when the resilient element is over-compressed.

6. Articulation according to one of claims 1 to 5, characterized in that the discs are glued onto one another in the mounting position.

7. Articulation according to one of claims 1 to 6, characterized in that one of the discs (18) includes two semi-cut portions (180) engaged inside holes (190) in the other disc (19).

8. Articulation according to one of claims 1 to 6, characterized in that the two discs bear on a bearing rigidly connected to one of the flanges.

## Patentansprüche

1. Gelenk zur Verwendung in Automobilsitzen, enthaltend einen festen Flansch (1), der eine Innenverzahnung (3) aufweist, die dazu bestimmt ist, entweder mit einem doppelten Planetenrad (5), dessen Verzahnungen (4 und 6) auf der einen Seite mit der Verzahnung (3) des festen Flansches (1) und auf der anderen Seite mit der Innenverzahnung (7) eines beweglichen Flansches (8) in Eingriff stehen, oder unmittelbar mit der Innenverzahnung des beweglichen Flansches zusammenzuwirken, einen Exzenter, der entweder auf das Planetenrad oder unmittelbar auf den beweglichen Flansch einwirkt, sowie eine Antriebsachse für den Exzenter mit zumindest einer Nase (21a), wobei der Exzenter aus zwei im Winkel gegeneinander beweglichen Scheiben (18, 19) besteht, die durch ein in zwei gebogenen Fenstern (23, 24) angeordnetes elastisches Element (30) miteinander verbunden sind, während im mittleren Teil dieser Scheiben (18, 19) jeweils zumindest eine kreisförmige Aussparung (18a, 19a) ausgebohrt ist, welche durch eine zur Aufnahme der Nase (21a) der Antriebsachse bestimmte Vertiefung (18b, 19b) verlängert ist,
dadurch gekennzeichnet, daß
jede der beiden Scheiben eine nicht kreisförmige Form aufweist, so daß die Scheiben, wenn sie winklig gegeneinander gespreizt sind, zusammen weitestgehend einen Kreis bilden, der praktisch die gesamte Mittelbohrung des Planetenrades ausfüllt, wobei jede Scheibe in einer Bohrung (5a) des Planetenrades oder das beweglichen Flansches angeordnet ist und die beiden Scheiben in der gegeneinander gespreizten Lage sodann die Nachregulierung des Spiels und die Unverrückbarkeit der Gelenkstellung gewährleisten,

2. Gelenk nach Anspruch 1, dadurch gekennzeichnet, daß die beiden Vertiefungen (18b, 19b) der Scheiben winklig gegeneinander versetzt sind, wenn sich die beiden Scheiben in der gegeneinander gespreizten Lage befinden, damit die Nase zunächst zur Freigabe des Exzenters auf eine Scheibe und dann auf beide Scheiben gleichzeitig wirkt.

3. Gelenk nach einem der Ansprüche 1 oder 2, dadurch gekennzeichnet, daß jedes gebogene Fenster an einem Ende eine Ausweitung (23a, 24a) aufweist, die sicherstellt, daß die Feder sich dort nur auf einem gebogenen Fenster abstützt.

4. Gelenk nach einem der Ansprüche 1 bis 3, dadurch gekennzeichnet, daß die Verbindung zwischen dem festen Flansch (1) und dem beweglichen Flansch (8) mittels eines gebördelten Rings (15) mit Zwischenfügung eines Kranzes (13) aus Kugeln (14) zwischen diesem Ring (15) und dem beweglichen Flansch (8) ausgeführt ist.

5. Gelenk nach einem der Ansprüche 1 bis 4, dadurch gekennzeichnet, daß in den Scheiben (18, 19) Löcher (25, 26, 27, 28) ausgebohrt sind, wobei diese Löcher bei jeder Scheibe (18, 19) paarweise diametral gegenüberliegend angeordnet und geringfügig winklig versetzt sind, was sich aufgrund der exzentrischen Lage dieser Scheiben (18, 19) ergibt, wenn das elastische Element (30) zusammengedrückt wird, wobei die Löcher (25, 26, 27, 28) den Einbau der durch die beiden Scheiben (18, 19) ausgeführten Steuernockenscheibe mit Hilfe beliebiger Elemente erlauben, wenn das elastische Element verstärkt zusammengedrückt wird.

6. Gelenk nach einem der Ansprüche 1 bis 5, dadurch gekennzeichnet, daß die Scheiben in Einbauposition miteinander verleimt sind.

7. Gelenk nach einem der Ansprüche 1 bis 6, dadurch gekennzeichnet, daß eine der Scheiben (18) zwei vorgestanzte Halbausschnitte (180) aufweist, die in die Löcher (190) der anderen Scheibe (190) eingesetzt sind.

8. Gelenk nach einem der Ansprüche 1 bis 6, dadurch gekennzeichnet, daß die beiden Scheiben auf einem fest mit einem der Flansche verbundenen Lager ruhen.
